# EUROPEAN PATENT APPLICATION

(11) **EP 4 744 753 A1**
(43) Date of publication of application: **20.05.2026**
(21) Application number: 24212713.2
(22) Date of filing: 13.11.2024
(51) Int. Cl.: B01D 19/00, C25B 9/70, C25B 15/08

(54) **GAS-LIQUID SEPARATOR FOR ELECTROLYSIS APPLICATIONS AND RELATED ELECTROLYSIS SYSTEM**

(71) Applicant: Siemens Energy Global GmbH & Co. KG, 81739 München (DE)
(72) Inventor: Do, Nga Thi Quynh, 91056 Erlangen (DE); Hanebuth, Marc, 90482 Nürnberg (DE)

(57) **Abstract**

A gas-liquid separator (3, 10, 11, 12, 13, 14) for gas-liquid separation in an electrolysis system is presented, wherein an evolving gas (H₂, O₂) can be separated from a two-phase flow (2). The separator comprises a buffer tank (8) comprising a gas outlet (8a) and a liquid outlet (8b), wherein the buffer tank (8) is suitable for retaining a defined volume of gas (4) and liquid (5), and a cyclone arrangement (6, 7) which is set up to fluidically communicate with the buffer tank (8), wherein the cyclone (6, 7) comprises an inlet (2, 60) for receiving the two-phase flow (2), which is to be phase-separated during the electrolysis, and a gas outlet (4) being arranged apart from an additional liquid outlet (5, 70) of the cyclone. Furthermore, an electrolysis system (30) comprising the gas-liquid separator is provided.

## Description

The present invention relates to a gas-liquid separator for fluid separation in electrolysis applications, particularly wherein a gas evolving from or generated by the electrolysis is separated from a two-phase flow, particularly a fluid or liquid. Moreover, a related electrolysis system, preferably a multi-stack electrolysis system as well as use of a hydrocyclone in or for gas-liquid separation in water electrolysis are provided.

A climate-friendly and sustainable process for producing green hydrogen (H₂) is the electrolysis of water, especially using renewable electrical energy. Hydrogen is known to play a key role in the energy transition and e.g. to serve as a fuel, fuel additive or energy carrier. With the potential to produce H₂ in large quantities in a climate-neutral manner and/or to store or transport it "carbon-free" via hydrogen carriers such as ammonia, promising solutions are also offered to the transportation sector and the chemical industry.

The so-called low-temperature electrolysis technologies, to which the present invention generally relates, include the so-called AEL ("Alkaline Electrolysis" using a liquid electrolyte), AEM electrolysis ("Anion Exchange Membrane"), and PEM electrolysis ("Proton Exchange Membrane"). In these techniques, water is split in a catalyst layer, generating hydrogen on the cathode side of each cell.

PEM electrolysis (PEM also stands for "Polymer Electrolyte Membrane") is gaining more and more importance in the industrial production of green hydrogen from renewable energy, among other things, due to its load-dynamic behaviour and suitability to cope with fluctuating power levels, especially compared to alkaline electrolysis, with its less complex peripherals. Favourably, high current densities and outputs can be achieved with PEM electrolysis even at higher load gradients and high purity of the hydrogen product.

Even though most hydrogen is still conventionally produced today, e.g., by steam reforming of methane or coal gasification, aggressive investments and support measures foreseeably lead to a significant trend towards industrial green hydrogen production, be it via AEL, PEM, or AEM electrolysis.

Hydrogen is produced electrolytically from water as a feedstock. This is an electrochemical process in which water is separated into its chemical components, oxygen (O₂) and hydrogen. The electrochemical cell reactions for PEM electrolysis can be described and distinguished as follows:

Anode electrode: 2H₂O → 4H⁺ + O₂ + 4e-

Cathode electrode: 4H⁺ + 4e- → 2H₂.

The two partial reactions are spatially separated by an ion-conductive membrane. A flow of protons (H⁺) through the membrane finally results in an ion current from one half-cell to the other, with hydrogen and oxygen being produced at the respective electrode.

In the case of AEM or AEL electrolysis, an ion flow occurs via OH- ions through the anion exchange membrane.

In PEM electrolysis, water is usually present on both the anode and cathode sides of the membrane. On the cathode side, a certain portion of the water ("drag" water) passes through the proton-conducting but otherwise largely gas- and liquid-tight membrane. According to advantageous designs of PEM electrolysis cells, additional water may be supplied to the cathode to ensure efficient cooling of the cell during operation. Such measures can be advantageous for cells without cooled bipolar plates as well as for additional cooling via the bipolar plates. For optimal cell function with high efficiency, it must be ensured that sufficient water is available for the reaction on the anode side.

In another application, electrolysis is used for chloride production, thereby likewise involving the use of electrical energy to drive chemical reactions that produce chlorine gas from chloride ions. The most common industrial process is the so-called chloralkali process, which typically uses a brine solution (for instance sodium chloride in water) as the electrolyte. In this process, an electric current is passed through the brine, causing the chloride ions to migrate to the anode where they are oxidized to form chlorine gas. Simultaneously, at the cathode, water is reduced to produce hydrogen gas and hydroxide ions. This method is highly efficient and widely used in the production of chlorine, which is a critical raw material for various chemical industries, including the manufacture of PVC, and other chemicals.

Hence, in most electrolysers a liquid substance is fed into an electrolysis stack, in which a gaseous substance is produced. Consequently, a two-phase flow, consisting of a gas fraction and a liquid fraction, leaves the stack. These two phases need to be separated into a gas flow (the aimed product) and a liquid flow which could be cooled down and recycled into the stack.

The gas-liquid mixture is separated at the outlet of the electrolysis stack using conventional gas-liquid separators (GLS). Currently, parameters like a residence time and pressure control as used in water electrolysis applications to achieve an effective separation result. Particularly, a pressure control logic could be used for safe dynamic operation.

On a large-scale electrolyser plant, preferably on a plant or system in the multidigit megawatt (MW) scale, usually large gas-liquid separators are required, wherein a gas volume percentage of the separator for gas (i.e., H₂ or O₂) potentially occupies more than 50% of the separator volume. This high gas volume inside the separator vessel may, however, be considered as a potential safety hazard under certain circumstances, especially if the gas is pressurized and/or flammable (H₂), oxidizing (O₂, Cl₂) or toxic (Cl₂).

Furthermore, the large GLS can adversely result in longer lead times for engineering and higher capital expenditure (CAPEX) .

It is further known in the practice of (water) electrolysers that the produced gas can be suspended in a form of very small gas bubbles which are floating in the liquid phase. These "microbubbles" can have a diameter in the range of only few micrometers when they leave an electrolyser stack. It is almost impossible to effectively separate these microbubbles from the liquid phase, because the necessary residence time would be too large requiring very large separating equipment. Consequently, these microbubbles are recycled back into the stack and are separated only after a few recirculations if sufficient bubble coalescence occurred. This recycle of gas bubbles has different unwanted effects causing an overall less efficient electrolysis operation, and also hardware issues in the pump circle, including reduced pump efficiency, increased noise, mechanical wear and damage to the pump and its seals.

Different types of cyclones have been utilized in gas-solid-separation and also in the oil and gas industry, like the uniflow-type and conical-type cyclone arrangements.

Despite certain advantages there are reasons why cyclones could not fully substitute gas-liquid (vessel) separators in industry-scale electrolysers, so far. Besides a poor market development for electrolysis units until now, the conventional approach retains a gas phase and a liquid phase and the separator serves hence as a reservoir for the liquid, and partly also for the gas. This reservoir is needed to buffer a dynamic operation of the electrolyser. For example, an increase in current density causes a sudden increase ("swelling") of the gas volume inside the recycling loop. In a conventional electrolyser, this effect is simply counteracted by an increased level inside the GLS. Inside a cyclone, however, the liquid level cannot be increased without losing its functionality. Sudden surplus of liquid would lead to a flooding of the cyclone and liquid would adversely enter the gas line.

In addition to this, other dynamic effects have an influence on the water balance. That is to say, because of the consumption of the water during electrolysis, a discontinuous refill of water is typically done, for which a reservoir with a flexible level is needed. Another example is the demand or requirement of a discontinuous 'purging' of some of the liquid and passing it through to a refinement system, e.g. to maintain highest purity standards.

Conventional gas-liquid separators already partly feature increased performance and process intensification e.g. by implementing overflow plates, or similar means to improve separation efficiency and/or by installing a heat exchanger inside the gas-liquid separator to reduce corrosion. Another aim is particularly to reduce so-called "gas hold-up" and minimize the system's footprint. Both enhancements were observed mainly in the horizontal gas-liquid separator type. However, it is important to note that these conventional methods do not result in a better dynamic control, neither in a smaller gas-liquid separator, a significant increase in separation efficiency nor a smaller gas volume.

It is, thus, an object of the present invention to provide means for improved gas-liquid separation which technically solves the above-mentioned difficulties and problems. Particularly, an improved gas-liquid separator is provided involving a cyclone arrangement being in fluidic communication with the buffer tank.

The mentioned object is achieved by the subject-matters of the independent claims. Advantageous embodiments are subject-matters of the dependent claims.

An aspect of the present invention relates to a gas-liquid separator for gas liquid separation in an electrolysis system, wherein an evolving gas is to be separated from a (bulk) two-phase flow.

The inventive separator comprises or buffer tank or (buffer) vessel comprising a gas outlet, wherein the buffer tank is suitable for retaining a defined volume of gas and liquid.

The separator further comprises a cyclone arrangement which is set up to fluidically communicate with the buffer tank. In other words, the cyclone arrangement is or comprises a (hydro)cyclone which is preferably involved in the gas separation loop. The cyclone comprises a (swirling) inlet, preferably with static swirlers or vanes receiving the two-phase flow and imparting a rotational movement.

The cyclone arrangement further expediently comprises a gas outlet being arranged apart from an additional liquid outlet of the cyclone.

It is actually the functional interplay between the buffer tank in the cyclone arrangement as described, which brings about the following specific advantages, thereby solving the above-listed problems.

For instance, with the given set-up, it is possible to depress and/or effectively separate the smaller fraction of microbubbles. This applies for pressurized electrolysis operations and alkaline water electrolysis in particular. The avoidance of microbubbles circling in the system is further owed to a two-step separation by the integration of the cyclone, which allows high fluid velocities and therewith an effective fluid separation.

Evidently, a flammable and hazardous gas volume can advantageously be reduced. This, in turn, results in a narrower explosion diameter in a risky scenario, thereby offering potential for improved explosion protection.

Importantly to note as well is the smaller footprint achievable with the overall system or devices leading to reduced capital expenditure and shorter production and design lead times.

In an embodiment the cyclone is a hydrocyclone with a swirling inlet and an outlet section being configured to effect separation of the liquid from the two-phase flow by the force of gravity. According to this embodiment, an advantageous "tool" is provided for effective gas-liquid separation.

The separator is suitable for water electrolysis, such as alkaline or PEM water electrolysis, the chloralkali process or other electrochemical or electrolytic reactions, in which a gas evolves and needs to be separated from the bulk fluid or liquid.

According to an embodiment the mentioned two-phase flow comprises a liquid phase of deionized water, potassium hydroxide (KOH) or sodium hydroxide (NaOH). Also, the two-phase comprises a gaseous compound, e.g. of hydrogen, oxygen, chloride, and/or another gaseous product from the electrolysis.

In a particular embodiment, the cyclone is set up, arranged or integrated upstream (referring to the gas stream) of the buffer tank, such that a two-phase flow first enters the cyclone via the inlet. This set-up is particularly simple, could in principle be offered as an upgrade of existing separator vessels, and enables to integrate the cyclone's function in the separation in favour of an improved performance as compared to available separation vessels. As will be described further below by way of the specific embodiments in the figures, the liquid outlet of the buffer tank could then expediently flow into the bulk liquid stream or loop.

In an alternative embodiment, the cyclone is set up inside the buffer tank, such that a two-phase flow directly enters the cyclone via its inlet, and a gas and/or liquid phase separated from the two-phase flow in the cyclone can inherently be released to the buffer tank. This implementation of the invention likewise excels in the added gas-liquid separation functionality of the cyclone, and particularly allows for a compact design of the device, also reducing footprint of the related system.

It is also contemplated according to the present invention that the mentioned embodiments are modified and/or two or more cyclones are provided, wherein a first cyclone is e.g. arranged upstream of the buffer tank, and a second cyclone is arranged inside the buffer tank. According to this set-up, a yet improved gas liquid separation is achieved. This situation describes essentially an internal cyclone and an external cyclone in serial arrangement and brings about the technical advantage of further improved gas separation, particularly an improved depression of microbubbles. Said bubbles can efficiently be prevented from entering the whole fluid loop in that the cyclone catches and separates the bubbles in the first (external) stage. As is evident for a skilled person, said microbubbles might be even more problematic when the liquid pertains to lye (KOH), like in case of an alkaline electrolysis.

The cyclone arranged upstream is preferably a uniflow (external) cyclone, and the cyclone integrated in the buffer tank is preferably a conical (internal) cyclone with a tangential two-phase inlet and a conical (outlet) section. This arrangement has particularly proven to provide good separation results.

Alternatively, also leading to acceptable results, the specification could as well be the other way around and the external cyclone could be a conical one, and the internal cyclone could be of uniflow design.

In an alternative embodiment, the cyclone and the buffer tank are set up in a parallel arrangement, wherein the entering two-phase flow is split, one branch of the two-phase flow is guided into the inlet of the cyclone, and the other branch of the flow is guided into a separate inlet of the buffer tank. Later on or downstream, liquids separated from the two-phase flow in the cyclone and the buffer/separation vessel respectively may merge again, eventually forming the main liquid loop.

The parallel configuration - being a workaround to the serial arrangement - likewise stand out for excellent gas separation properties. The parallel arrangement particularly allows for more freedom in the buffering, levelling and control of the liquid in the buffer vessel.

In another embodiment, the buffer tank comprises a sensor or gauge for controlling the liquid level, wherein the separator is further set up to compensate an excess amount of gas in the tank by a surplus of liquid. This functionality has proven very successful to reduce the risks of flammable gas mixture and in terms of a versatile operation of large electrolysis plants.

The separator, preferably being of horizontal configuration, i.e. preferably an orientation of the tank's main axis of extension arranged horizontally, wherein the buffer tank comprises an overflow plate, a knitted mesh to improve separation efficiency and/or a heat exchanger. These features manifest in technical merits in the context of larger electrolysis systems, like facilitation of pressure control during operation. Also, corrosion and gas hold-up can favourably be reduced in the system, and the system's footprint be optimized.

A further aspect of the present invention relates to an electrolysis system comprising a gas-liquid separator as described, the system preferably being a PEM or alkaline water electrolysis device.

In a preferred embodiment, the system is a multiple-stack electrolysis system and comprises a plurality of cyclones in fluidical communication, each of which being dedicated to and/or set up downstream of a related electrolysis stack (each cyclone arranged upstream of each stack outlet), thereby forming a joint gas-liquid separation loop.

A still further aspect of the present invention relates to the use of a (uniflow or conical type) hydrocyclone, for gas liquid separation in water electrolysis and/or a chloralkali process. Particularly, an aspect of the present invention relates to the single use of the cyclone for gas-liquid separation purposes, i.e. without involving any other type of vessel. This application is particularly promising in an operation scenario with low capacity and/or low liquid flow demand, wherein the gas-liquid separation can be replaced completely by a cyclone or minimized to a small vessel size.

Advantages and embodiments relating to the described gas-liquid separator are valid or pertain likewise to the electrolysis system and/or the use of the hydrocyclone as described.

Further, features and advantageous embodiments become apparent from the following description of the exemplary embodiment in connection with the Figures.
Figure 1 shows a simplified schematic of a conventional gas liquid separator in an electrolysis application.
Figure 2 indicates in a simplified view a conventional uniflow cyclone for fluid separation.
Figure 3 indicates, similarly to Figure 2, a conventional conical cyclone arrangement.
Figure 4 indicates a use of a cyclone for a related gas liquid separation.
Figure 5 shows likewise in the schematic view, an inventive gas-liquid separator according to a first embodiment.
Figure 6 schematically shows an inventive gas-liquid separator according to another, integrated, embodiment.
Figure 7 exemplifies an inventive gas-liquid separator according to yet another embodiment in a simplified manner.
Figure 8 indicates in addition to the features shown in Figure 7 as well a related electrolysis stack and electrolysis system.

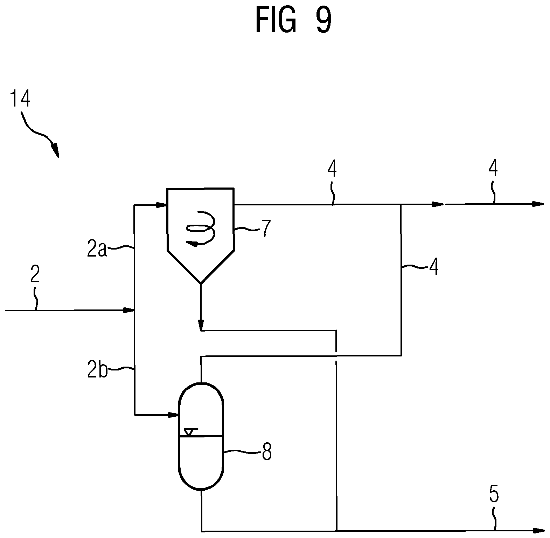

Similarly, Figure 9 shows another embodiment of an inventive gas-liquid separator in a parallel configuration.

Like elements, elements of the same kind and identically acting elements may be provided with the same reference numerals in the Figures. The Figures are not necessarily depicted true to scale and may be scaled up or down to allow for a better understanding of the illustrated principles anyway. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

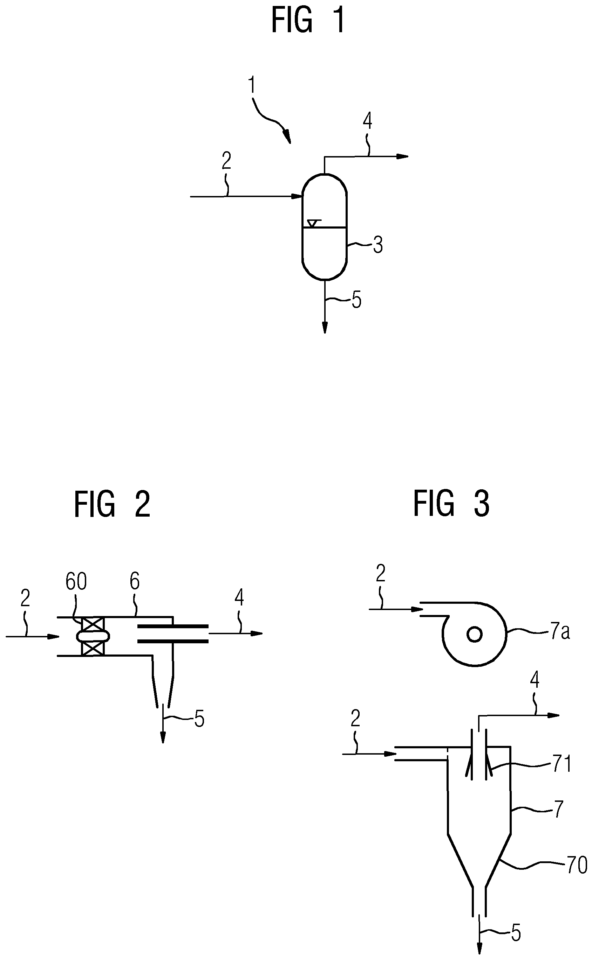

Figure 1 shows a conventional gas liquid separation system 1. The depicted system 1 may form part of the prior art. The system comprises a two-phase flow or inlet, which may stem from an electrolysis stack or electrolysis cell and is fed towards the gas-liquid separator/vessel 3. At the top, indicated with reference 4, there is a gas flow or outlet indicating the way according to which the gas, separated from any fluid or liquid, may be directed away. By contrast, the bottom, shows a liquid flow or flow outlet 5 via which any liquid, separated from the two-phase flow 2, can be fed back to main liquid stream. The horizontal line inside the vessel indicates a respective filling level, wherein the liquid is collected at the bottom driven by the force of gravity, and any gas will gather at the top of the vessel. Accordingly, a gas-liquid mixture is separated at the outlet of the electrolysis stack using the conventional gas-liquid separators, as shown in Figure 1.

Figures 2 and 3 each indicate conventional cyclone arrangements being suitable for gas-liquid separation in general. As mentioned above, however, these types of cyclones, e.g. hydrocyclones, are not known for industry-scale electrolysis applications since they lack the above-described buffering functionality.

These different types of cyclones (cf. Figures 2 and 3) have at most been utilized in applications of low fluid throughput or in the oil and gas industry.

Figure 2 depicts a so-called uniflow cyclone. The two-phase flow 2 enters the cyclone from the left and is transported through a section with preferably static swirl vanes 60. These vanes force the fluid into a rotational move and cause a radial acceleration of the fluid 2. Because the density of the liquid is much higher than the density of the gas, the liquid phase tends more to the surface of the cyclone, while the gas phase stays essentially in the center of the cyclone. The gas hence leaves the cyclone 6 through the pipe 4, while the liquid is collected through pipe 5.

A different type of cyclone is shown in Figure 3. Here, the two-phase flow enters this conical-type cyclone (cf. reference 7) tangentially, which causes a rotation of the fluid inside the cyclone. The upper part of the figure shows the top sectional view 7a of the tangential inlet portion. Because of the conical shape of the outlet section 70, this rotation leads to an increased gravitational exerting to the fluid 2. As in case of the uniflow cyclone 6, the result is a phase separation caused by a difference in density and the accumulation of the liquid on the inner surface of the cyclone. The liquid leaves downwards through pipe 5, while the gas phase leaves the cyclone upwards through pipe 4.

There are already advanced design features for cyclones available, e.g. a skirt 71 (also shown in Figure 3) to prevent the creep of water into the gas flow in order to increase separation efficiency.

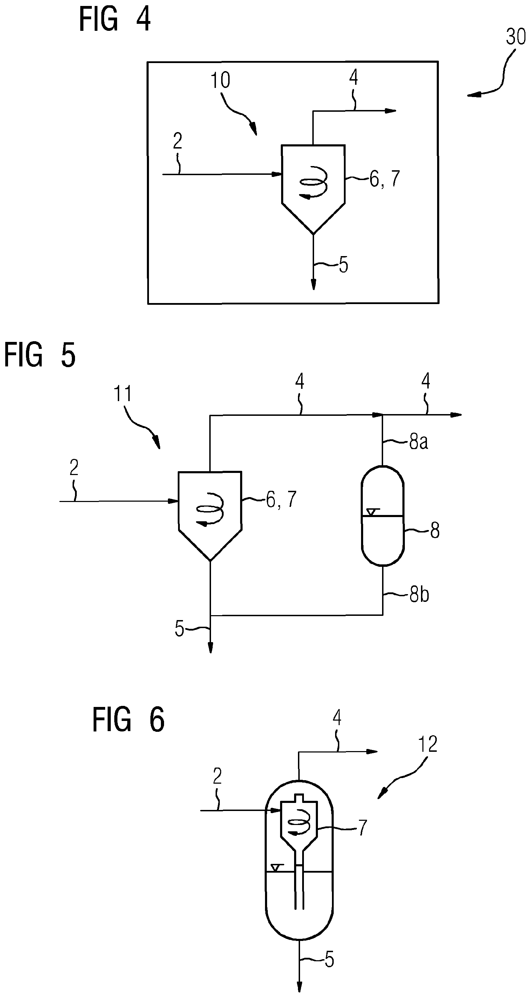

Figure 4 shall simply indicate the principal and use of cyclones of the described type 6,7 in conjunction with its use for gas-liquid separation in or during an electrolysis process, like water electrolysis which deploys alkaline electrolysers and PEM electrolysers. Particularly, numeral 10 shall indicate the gas-liquid separation device comprising a cyclone 6,7 being integrated into an electrolysis system 30. As described above by way of Figures 2 and 3, the (fluidic) two-phase flow 2 enters the system from the left and the gas is separated from the fluid (or vice versa) via lines 4 and 5. The two-phase-flow 2 expediently comprises a liquid phase of deionized water, a KOH solution and/or another aqueous solution, and a gaseous phase, like hydrogen H₂, oxygen O₂, chlorine Cl₂, or another gaseous product from the electrolysis.

Figure 5 shows a schematic principle of the inventive gas-liquid separator 11 according to a (first) embodiment. The separator device 11 is set up to separate an evolving gas from the two-phase fluid 2. As in the above-described situations, the cyclone 6, 7 comprises an inlet 2, for receiving the two-phase flow 2, which is to be phase-separated during the electrolysis, and a gas outlet 4 being arranged apart from an additional liquid outlet 5, 70 of the cyclone. In addition to the described cyclone arrangement 6,7 the device comprises a buffer tank 8. The buffer tank 8 in turn comprises a gas line 8a and a liquid line 8b, wherein the buffer tank 8 is further suitable to hold or retain a defined volume of gas (cf. 4) and liquid (cf. 5).

The buffer tank or vessel 8 and/or the cyclone are arranged in configured to fluidically communicate with each other in the way described herein.

In other words, according to the embodiment shown in Figure 5, the cyclone is set up 'upstream' of the buffer tank 8. This applies at least with regards to the gas flow. In the operation of a related separator, the two-phase flow 2 first enters the cyclone 6, 7 via the inlet (cf. 2). The separated gas flow 4 is fluidically connected to the buffer vessel 8. To this effect - when the electrolysis power increases - there is more gas phase available in the circuit, while the volume of the liquid 5 remains approximately the same. An excess gas 4 then needs to be discharged. As a result, the fill level in the buffer tank 8 may rise and gas 4 is pushed out through line 8a.

Figure 6 shows yet another inventive embodiment of the separator 12, wherein the cyclone (can be a cyclone of type 6 or 7) is set up inside the buffer tank 8, such that a two-phase flow 2 directly enters the cyclone via its inlet and, a gas and/or liquid phase separated from the two-phase flow 2 is inherently released to the buffer tank 8. Evidently this brings an additional advantage of compact design and footprint and likewise improves gas separation efficiency.

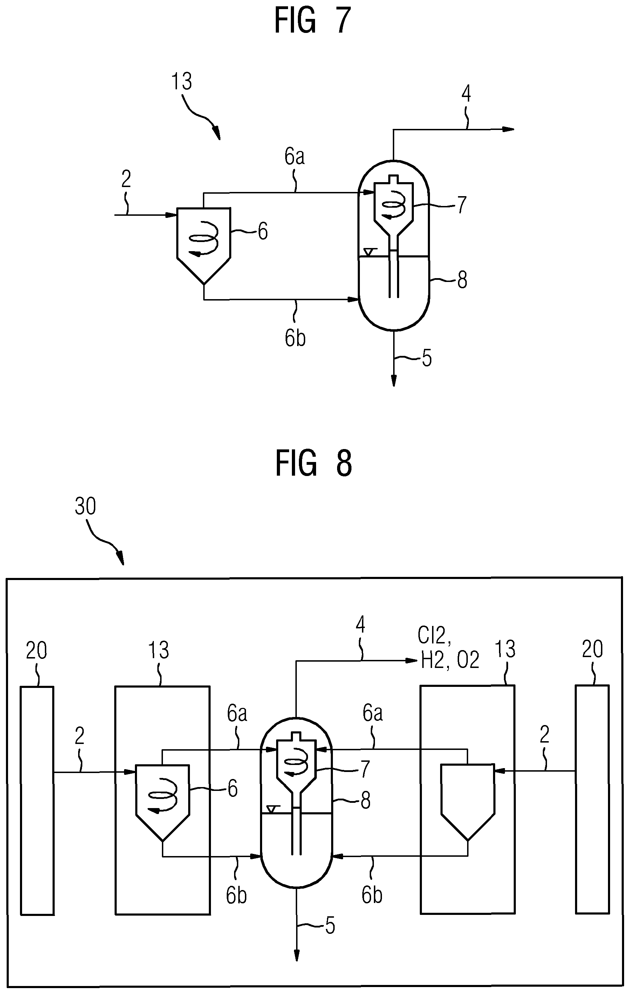

Figure 7 indicates an inventive separator (indicated here with reference 13) in a somewhat combined embodiment, superposing the "upstream" configuration as shown initially in Figure 5 and the "integrated" configuration, of Figure 6. Particularly two cyclones 6, 7 are provided, wherein a first cyclone 6 is arranged upstream of the buffer tank 8, and a second cyclone 7 is arranged inside the buffer tank 8.

Preferably, the cyclone 6 is a uniflow cyclone, and the cyclone 7 integrated in the buffer tank has a tangential two-phase inlet and a conical outlet section 70. Accordingly, the separator is set up such that an outlet gas flow from the (uniflow) cyclone 6a enters the buffer tank 8 and leads into the cyclone vessel 7.

Thus, at first, a gas is separated from the two-phase flow in line 6a. Then, in a second step, it is again separated in the second cyclone stage 7 to provide a pure gas in the outlet line 4. On the other hand, liquid flow from the (uniflow) cyclone is discharged into the liquid reservoir of the tank 8 and can later flow into the liquid line 5.

This embodiment has proven to be particularly effective in the gas-liquid separation and, more specifically, in the depression and prevention of microbubbles in general. It is, moreover, especially effective in preventing droplets getting into the gas stream, which is another advantage of the invention.

Figure 8 exemplifies a similar embodiment, as the one depicted in Figure 7, wherein the separator is additionally integrated into an electrolysis system 30. The sketched electrolysis system 30 is preferably a multi-stack system comprising a plurality of electrolysis stacks 20; for ease of indication, only two different stacks 20 are shown though. The system 30 further comprises a plurality of cyclones in fluidical communication, each of which being dedicated to and set up downstream of a related stack 20. To this effect, the plant or device features a joint gas-liquid separation loop.

As compared to the above figures, it is shown that the gas loop comprises e.g. an outlet or exhaust line for hydrogen and/or oxygen as evolving gases.

Finally, Figure 9 indicates another inventive embodiment 14 of the separator, wherein the cyclone and the buffer tank 8 - both apparently contributing to the gas-liquid separation - are set up in a parallel arrangement. Therein, the entering two-phase flow 2 is split and one branch 2a is guided into the inlet of the cyclone 6, 7, whereas the other branch 2b is guided into a separate inlet of the buffer tank 8. This embodiment also brings certain advantages in terms of an easy levelling and control of the vessel. This embodiment is further equally efficient and improves gas-liquid separation efficiency, thereby allowing moreover an optimized footprint.

Without loss of generality, the outlined embodiments are likewise suitable for any type of electrochemical or electrolysis process, wherein a gas is evolving and needs to be separated from the liquid or fluid. Also, any of the depicted embodiments are equally suitable to be integrated in an electrolysis plant as shown in Figure 8 for instance.

In either of the described embodiments, the buffer tank 8 also comprises a sensor or gauge for controlling the liquid level, wherein the separator is preferably further set up to compensate an excess amount of gas 4 in the tank by a surplus of liquid 5.

The present invention could be summarized or paraphrased in the following way:
The combination of a swirling inlet and force of gravity brings a unique advantage of a cyclone for efficient gas and liquid phase separation in the context of electrolysis. Taking this main advantage, the current innovative concept applied in electrolysis aims to have cyclone arrangement inside the gas liquid separation loop which allows to advantageously simplify and improve the separation loop. Secondly, reduction of design complexity and footprint thereby also reducing the flammable gas volume is achieved. As another merit, capital expenditures can favourably be reduced.

The configurations 10, 11, 12, 13 are particularly advantageous for a small electrolysis module and low liquid inlet flow demand, wherein a pressure difference control between anode and cathode are not particularly critical. The purpose of the buffer tank is to hold deionized water consumed in electrochemical reaction, and compensating purging and loss through the saturated gas stream. Notedly, even the vessel tank can conditionally be omitted completely, and the `all-cyclone' concept be selected for these scenarios.

The configuration 12, 13 and 14 of the separator are particularly suitable for a vertical-type separator design, and larger electrolysis capacity due to the vessel height. In this context further advantages of the application relate to a favorable freedom and versatility in the cyclone installation, easy maintenance, high residence time of fluid in the loop, and a larger liquid volume retainable as compared to conventional approaches.

In conclusion, main attributes and merits of the invention are versatility over various electrolysis applications, like water electrolysis and even the chloralkali process and the ability to deal with and accommodate the 'swelling factor' during dynamic operation. In addition, there is the possibility to balance volume of water or aqueous solution favourably during refill and purging processes. As mentioned above already, footprint of the separator, particularly for multi-megawatt industrial-scale electrolysis applications, can favourably be reduced. Taking e.g. a 5 MW pressurized electrolysis system as a respective basis, footprint of the inventive concept might amount to 1 m times 3.2 m only for the horizontal separator design, whereas footprint of at least 1.2 m times 4.5 m is required for a conventional separator not involving the inventive cyclone.

## Claims

1. A gas-liquid separator (3, 10, 11, 12, 13, 14) for gas-liquid separation in an electrolysis system, wherein an evolving gas (H₂, O₂, Cl₂) is to be separated from a two-phase flow (2), the separator comprising:
- a buffer tank (8) comprising a gas outlet (8a) and a liquid outlet (8b), wherein the buffer tank (8) is suitable for retaining a defined volume of gas (4) and liquid (5), and
- a cyclone arrangement (6, 7) which is set up to fluidically communicate with the buffer tank (8), wherein the cyclone (6, 7) comprises an inlet (2, 60) for receiving the two-phase flow (2), which is to be phase-separated during the electrolysis, and a gas outlet (4) being arranged apart from an additional liquid outlet (5, 70) of the cyclone.

2. The gas-liquid separator (10, 11, 12, 13, 14), according to claim 1, wherein the cyclone (6, 7) is a hydrocyclone with a swirling inlet (60) and an outlet section being configured to effect separation of the liquid by the force of gravity.

3. The gas-liquid separator (10, 11, 12, 13, 14) according to claim 1 or 2, being suitable for water electrolysis, such as alkaline or proton-exchange-membrane (PEM) water electrolysis, or a chloralkali process.

4. The gas-liquid separator (10, 11, 12, 13, 14) according to one of the previous claims, wherein the two-phase-flow (2) comprises a liquid phase of deionized water, a KOH solution and/or another aqueous solution, and a gaseous phase, like hydrogen (H₂), oxygen (O₂), chlorine (Cl₂), or another gaseous product from the electrolysis.

5. The gas-liquid separator (10, 11, 12, 13, 14) according to one of the previous claims, wherein the cyclone (6, 7) is set up upstream of the buffer tank (8), such that a two-phase flow (2) first enters the cyclone (6, 7) via the inlet (2).

6. The gas-liquid separator (10, 11, 12, 13, 14) according to one of the previous claims, wherein the cyclone (6, 7) is set up inside the buffer tank (8), such that a two-phase flow (2) directly enters the cyclone (6, 7) via its inlet and, a gas and/or liquid phase separated from the two-phase flow (2) in the cyclone (6, 7) is directly released to the buffer tank (8) .

7. The gas-liquid separator (10, 11, 12, 13, 14) according to one of the previous claims, comprising two cyclones (6, 7), wherein a first cyclone (6) is arranged upstream of the buffer tank (8), and a second cyclone (7) is arranged inside the buffer tank (8).

8. The gas-liquid separator (10, 11, 12, 13, 14) according to claim 7, wherein the cyclone (6, 7) arranged upstream is a uniflow cyclone, and the cyclone integrated in the buffer tank has a tangential two-phase inlet and a conical outlet section (70).

9. The gas-liquid separator (10, 11, 12, 13, 14) according to one of the previous claims, wherein the cyclone (6, 7) and the buffer tank (8) are set up in a parallel arrangement, wherein the entering two-phase flow (2) is split and one branch (2a) is guided into the inlet of the cyclone (6, 7), and the other branch (2b) is guided into a separate inlet of the buffer tank (8).

10. The gas-liquid separator (10, 11, 12, 13, 14) according to one of the previous claims, wherein the buffer tank (8) comprises a sensor or gauge for controlling the liquid level, wherein the separator is further set up to compensate an excess amount of gas (4) in the tank by a surplus of liquid (5) .

11. The gas-liquid separator (10, 11, 12, 13, 14) according to one of the previous claims, the separator preferably being of horizontal configuration, wherein the buffer tank (8) comprises an overflow plate, a knitted mesh to improve separation efficiency and/or a heat exchanger.

12. An electrolysis system (30) comprising a gas-liquid separator according to one of the previous claims, being preferably a PEM or alkaline water electrolysis device.

13. The system (30) according to claim 12 being a multiple-stack electrolysis system, comprising a plurality of cyclones (6, 7) in fluidical communication, each of which being dedicated to and set up downstream of a related electrolysis stack (20), thereby forming a joint gas-liquid separation loop.

14. Use of a hydrocyclone (6, 7), particularly according to one of the previous claims, for gas-liquid separation in water electrolysis.
